# EUROPEAN PATENT APPLICATION

(11) **EP 2 210 690 A1**
(43) Date of publication of application: **28.07.2010**
(21) Application number: 08777989.8
(22) Date of filing: 09.07.2008
(51) Int. Cl.: B22F 1/00, B22F 9/24, C22C 19/03, H01B 1/22, H01B 5/00, H01B 13/00, H01G 4/12

(54) **NICKEL POWDER OR ALLOY POWDER HAVING NICKEL AS MAIN COMPONENT, METHOD FOR MANUFACTURING THE POWDER, CONDUCTIVE PASTE AND LAMINATED CERAMIC CAPACITOR**

(30) Priority: 25.09.2007 JP 2007247598
(71) Applicant: Sumitomo Electric Industries, Ltd., Osaka 541-0041 (JP)
(72) Inventor: OKADA, Issei, Osaka-shi Osaka 554-0024 (JP); KOYAMA, Keiji, Osaka-shi Osaka 554-0024 (JP)
(74) Representative: Setna, Rohan P.
(86) International application number: PCT/JP2008/062380
(87) International publication number: WO 2009/041142

(57) **Abstract**

Provided is a multi-layered ceramic capacitor including an internal electrode, the surface of which is smoothened and in which electrode breakage can be reliably prevented. Also provided are a conductive paste and a nickel powder or an alloy powder containing nickel as a main component, which are used in the multi-layered ceramic capacitor, and a method for manufacturing the powder. The nickel powder or the alloy powder containing nickel as a main component of the present invention has a spherical shape, a mean particle diameter D₅₀ in the range of 10 to 300 nm, and a ratio (Dₘₐₓ/D₅₀) of a maximum particle diameter Dₘₐₓ to the mean particle diameter D₅₀ of 3 or less.

## Description

### Technical Field

The present invention relates to a metal powder and a method for manufacturing the powder, a conductive paste, and a multi-layer ceramic capacitor. In particular, the present invention relates to a metal powder suitable for conductive fine particles for a conductive paste used in internal electrodes of a multi-layer ceramic capacitor, a method for manufacturing the powder, a conductive paste and multi-layer ceramic capacitor that contain the powder.

### Background Art

Recently, metal powders have been used in various fields and used, as a material for thick-film conductors, for forming electrical circuits such as electrodes of a multi-layer ceramic component. For example, internal electrodes of a multi-layer ceramic capacitor (MLCC) are formed using a conductive paste containing a metal powder.

Such a multi-layer ceramic capacitor includes a ceramic main body and a pair of external electrodes provided on both ends of the ceramic main body. The ceramic main body is composed of a multi-layer ceramic sintered body prepared by alternately stacking a plurality of dielectric layers and a plurality of conductive layers (internal electrode layers) by compression bonding, and sintering the stacked layers to integrate to each other.

More specifically, for example, a metal powder is mixed with an organic vehicle prepared by dissolving an organic binder such as a cellulosic resin in a solvent such as terpineol, and the mixture is kneaded and dispersed with a three-roll mill or the like to prepare a conductive paste for internal electrodes. This conductive paste is printed onto ceramic green sheets forming the dielectric layers, and the ceramic green sheets and conductive paste layers (internal electrode layers) are alternately stacked by compression bonding to form a multi-layer body. The multi-layer body is then sintered in a reductive atmosphere. Thus, a multi-layer ceramic sintered body can be obtained.

Hitherto, metals such as platinum, palladium, and silver-palladium alloys have been used as metal powders contained in conductive pastes for forming internal electrodes of such multi-layer ceramic capacitors. However, since these metals are expensive, recently, a more inexpensive metal such as nickel has been used in order to reduce the cost.

Furthermore, recently, with the realization of high-performance electronic components, a reduction in the size and an increase in the capacitance of a multi-layer ceramic capacitor have been desired, and a reduction in the thickness of each internal electrode (a layer thickness of an internal electrode of 1 µm or less) and smoothening of the surface of the electrode have been required. Under these circumstances, a nickel powder that does not contain coarse particles in a large amount but contains fine particles has been proposed as a metal powder contained in a conductive paste forming internal electrodes of a multi-layer ceramic capacitor. More specifically, for example, a nickel powder manufactured by reducing a nickel salt in a reaction solution in a state in which a carboxylic acid or an amine containing a carboxyl group and/or an amino group and a noble metal catalyst are incorporated in the reaction solution containing the nickel salt and a polyol has been disclosed. It is described that such a nickel powder does not contain coarse particles in a large amount but contains fine particles and has a sharp particle size distribution, and thus, by forming internal electrodes of a multi-layer ceramic capacitor using a conductive paste containing the nickel powder, a reduction in the thickness of each internal electrode and smoothening of the surface of the electrode can be realized (refer to, for example, Patent Document 1).
Patent Document 1: Japanese Unexamined Patent Application Publication No. 2004-139838

### Disclosure of Invention

### Problems to be Solved by the Invention

However, in general, since a nickel powder has magnetism, nickel particles are readily linked to each other, thereby forming a chain-like powder in a process of manufacturing the nickel powder. Accordingly, even when the above-described known nickel powder is used, if the nickel powder is such a linked, chain-like powder, it is difficult to incorporate the powder in a conductive paste with a high density. As a result, it is difficult to smoothen the surfaces of electrodes. Furthermore, the amount of shrinkage due to sintering of ceramic green sheets is smaller than the amount of shrinkage of the conductive paste containing the nickel powder. Accordingly, as the sintering proceeds, the conductive paste is broken off into islands, thereby causing electrode breakage (breakage of an internal electrode). As a result, the capacitance of the multi-layer ceramic capacitor is disadvantageously decreased. These disadvantages particularly significantly occur when the thickness of an internal electrode layer is 1 µm or less.

The present invention has been made in view of the above problems. It is an object of the present invention to provide a multi-layer ceramic capacitor including an internal electrode, the surface of which can be smoothened even when the thickness of an internal electrode layer is reduced and in which electrode breakage can be reliably prevented, a conductive paste used in the multi-layer ceramic capacitor, a nickel powder or an alloy powder containing nickel as a main component, and a method for manufacturing the powder.

### Means for Solving the Problems

In order to achieve the above object, an invention described in claim 1 provides a nickel powder or an alloy powder containing nickel as a main component, wherein the powder has a spherical shape, a mean particle diameter D₅₀ in the range of 10 to 300 nm, and a ratio (Dₘₐₓ/D₅₀) of a maximum particle diameter Dₘₐₓ to the mean particle diameter D₅₀ of 3 or less.

According to this configuration, the nickel powder or the alloy powder containing nickel as a main component has a sharp particle size distribution. Accordingly, when the nickel powder or the alloy powder containing nickel as a main component is used in a conductive paste for internal electrodes of a multi-layered ceramic capacitor, the powder can be easily included in the conductive paste with a high density. Accordingly, even when an internal electrode having a small layer thickness of 1 µm or less is formed using a conductive paste containing a nickel powder or an alloy powder containing nickel as a main component, the surface of the electrode can be easily smoothened and electrode breakage can be prevented. If the mean particle diameter D₅₀ is smaller than 10 nm, since the particles are excessively small, a surface activity significantly increases and sintering readily proceeds at low temperatures. Consequently, as the sintering proceeds, the conductive paste is broken off into islands, and electrode breakage tends to occur. On the other hand, if the mean particle diameter D₅₀ is larger than 300 nm, the particle diameter is large, namely, about 1/3 of the layer thickness of 1 µm, and thus a smooth film having a thickness of 1 µm or less is not readily obtained. In addition, if the ratio Dₘₐₓ/D₅₀ is larger than 3, the powder has a wide particle-size distribution and contains coarse particles. Accordingly, a layer having a high density cannot be obtained and electrode breakage tends to occur.

An invention described in claim 2 provides a method for manufacturing a nickel powder or an alloy powder containing nickel as a main component, the method including, in a reaction solution containing nickel ions, a reducing agent, and a dispersant, reducing the nickel ions by the reducing agent to precipitate a nickel powder or an alloy powder containing nickel as a main component, wherein the dispersant is an ammonia compound having a molecular weight of 150 or less.

According to this configuration, in the reaction solution, the ammonia compound adsorbs to the surface of the precipitated nickel powder or alloy powder containing nickel as a main component and functions as a barrier for preventing the aggregation of the nickel powder or the alloy powder containing nickel as a main component. Therefore, the dispersibility of the nickel powder or the alloy powder containing nickel as a main component is improved in the reaction solution, thus preventing the formation of a chain-like powder due to the aggregation of nickel particles or alloy particles containing nickel as a main component. Accordingly, since the reductive reaction can be allowed to occur uniformly in the reaction solution, it is possible to obtain a nickel powder or an alloy powder containing nickel as a main component, the powder having a spherical shape and a sharp particle size distribution. As a result, in the case where the nickel powder or the alloy powder containing nickel as a main component is used in a conductive paste for internal electrodes of a multi-layer ceramic capacitor, the powder can be easily included in the conductive paste with a high density. Accordingly, even when an internal electrode having a small layer thickness of 1 µm or less is formed using the conductive paste containing the nickel powder or the alloy powder containing nickel as a main component, the surface of the electrode can be easily smoothened and electrode breakage can be prevented. It is necessary that the ammonia compound have a molecular weight of 150 or less. If the molecular weight is more than 150, the effect of improving the dispersibility of the nickel powder or the alloy powder containing nickel as a main component is not sufficiently exhibited.

An invention described in claim 3 provides the method for manufacturing a nickel powder or an alloy powder containing nickel as a main component described in claim 3, wherein the ammonia compound is ammonium chloride. According to this configuration, the dispersibility of the nickel powder or the alloy powder containing nickel as a main component can be further improved in the reaction solution, thus reliably preventing the formation of a chain-like powder due to the aggregation of nickel particles or alloy particles containing nickel as a main component. As a result, it is possible to obtain a nickel powder or an alloy powder containing nickel as a main component, the powder having a spherical shape and a uniform particle diameter.

An invention described in claim 4 provides the method for manufacturing a nickel powder or an alloy powder containing nickel as a main component described in claim 2 or 3, wherein the reducing agent is titanium trichloride. According to this configuration, since titanium trichloride has a strong reduction activity, nickel ions in the reaction solution can be easily reduced.

An invention described in claim 5 provides a conductive paste containing, as main components, the nickel powder or the alloy powder containing nickel as a main component described in claim 1 and an organic vehicle. According to this configuration, it is possible to provide a conductive paste in which a nickel powder or an alloy powder containing nickel as a main component, the powder having a spherical shape and a sharp particle size distribution, is included with a high density. Accordingly, it is possible to provide a conductive paste which is the most suitable for forming internal electrodes of a multi-layer ceramic capacitor for which a reduction in the thickness and smoothening of the electrode surfaces are desired and in which electrode breakage is not caused.

An invention described in claim 6 provides a multi-layer ceramic capacitor including a capacitor main body formed by alternately stacking internal electrode layers and dielectric layers, wherein the internal electrode layers are composed of the conductive paste described in claim 5.

According to this configuration, it is possible to provide a multi-layer ceramic capacitor including internal electrodes each of which has a layer thickness of 1 µm or less, the surfaces of which are smooth, and in which electrode breakage is not caused. Advantages of the Invention

The present invention can provide a metal powder which can provide an electrode surface that is sufficiently smoothened even in the case where an internal electrode having a layer thickness of 1 µm or less is formed, and which can prevent the occurrence of electrode breakage in the form of a conductive paste containing a nickel powder or an alloy powder containing nickel as a main component.

### Brief Description of Drawings

[Fig. 1] Figure 1 is an electron micrograph showing a nickel powder in Example 1.
[Fig. 2] Figure 2 is an electron micrograph showing a nickel powder in Comparative Example 1.
[Fig. 3] Figure 3 is an electron micrograph showing a nickel powder in Comparative Example 2.

### Best Mode for Carrying Out the Invention

A preferred embodiment of the present invention will be described below. A metal powder according to the present invention is used as a conductive powder for a conductive paste used in internal electrodes of a multi-layer ceramic capacitor. According to a method for manufacturing a metal powder of the present invention, the metal powder can be prepared by reducing metal ions in an aqueous solution to conduct a wet reduction treatment of a metal compound.

More specifically, a water-soluble metal compound is added to water or a mixture of water and a lower alcohol and dissolved therein to prepare an aqueous solution containing metal ions, and a dispersant is added to this aqueous solution. Subsequently, an aqueous solution in which a reducing agent is dissolved and an aqueous solution containing complex ions are added to the resulting aqueous solution to prepare a reaction solution, and the reaction solution is stirred. Thus, a metal powder can be prepared.

For example, in the case where a nickel powder or an alloy powder containing nickel as a main component is manufactured as a metal powder, the powder is manufactured as follows. An aqueous solution containing a dispersant and metal ions (nickel ions) produced by dissolving a nickel salt (e.g., nickel chloride) serving as a metal compound in pure water, an aqueous titanium ion solution containing trivalent titanium ions functioning as a reducing agent, and an aqueous solution containing complex ions are mixed in a predetermined ratio to prepare a reaction solution. An aqueous sodium carbonate solution was then added as a pH adjuster to the reaction solution so as to adjust the pH, and the resulting reaction solution is stirred, whereby the nickel ions are reduced to precipitate a nickel powder or an alloy powder containing nickel as a main component.

The metal powder according to the present invention is not particularly limited, but a nickel powder or an alloy powder containing nickel as a main component is preferably used. This is because a nickel powder or an alloy powder containing nickel as a main component exhibits good electrical conductivity and has good oxidation resistance compared with other metals such as copper, and thus a decrease in the electrical conductivity due to oxidation does not tend to occur and such a powder is preferred as a conductive material. For example, a powder of an alloy of nickel and at least one element selected from the group consisting of manganese, chromium, cobalt, aluminum, iron, copper, zinc, silver, and palladium can be used as the nickel alloy powder. The content of nickel in the alloy powder containing nickel as a main component is 60% by weight or more and preferably 80% by weight or more. This is because when the content of nickel is small, the alloy powder is readily oxidized during sintering and thus electrode breakage, a decrease in the capacitance, and the like readily occur.

The nickel salt used is not particularly limited, but, for example, at least one nickel salt selected from the group consisting of nickel chloride, nickel nitrate, nickel sulfate, nickel acetate, nickel sulfamate, and nickel hydroxide can be used. Among these nickel salts, nickel chloride is preferably used from the standpoint that it contains a chlorine ion that is the same type of ion as the ion contained in titanium trichloride serving as a reducing agent.

The concentration of the nickel salt in the reaction solution is preferably 5 g/L or more and 100 g/L or less. The reason for this is as follows. If the concentration of the nickel salt is less than 5 g/L, it is difficult to reduce and precipitate a sufficient amount of a nickel powder and thus productivity is decreased. If the concentration of the nickel salt is more than 10 g/L, the probability of collision of nickel particles increases and thus the particles are readily aggregated, which may result in a disadvantage of difficulty of controlling the particle diameter.

Examples of the reducing agent that can be used include titanium trichloride, sodium borohydride, and hydrazine. Among these, preferably, titanium trichloride, which has a strong reduction activity to metal ions, is used and the metal ions are reduced using an aqueous titanium ion solution containing trivalent titanium ions.

The complex ion, which forms a complex, forms a complex with a nickel ion to stabilize the ion, whereby the rate of reaction can be controlled. The complex ion, which form a complex, and the pH adjuster are not particularly limited as long as they are usually used in a step of reducing and precipitating a nickel powder. More specifically, for example, sodium carbonate, sodium hydroxide, ammonia, or the like can be used as the pH adjuster. For example, a citrate ion, a tartrate ion, an acetate ion, a gluconate ion, an ammonium ion, or the like can be used as the complex ion.

Furthermore, in this embodiment, a dispersant is used in a process of manufacturing a nickel powder in order to prevent the nickel powder precipitated by a reductive reaction in the reaction solution from aggregating and to sharpen the particle size distribution of the nickel powder. In this embodiment, an ammonia compound having a low molecular weight (molecular weight of 150 or less) is used as the dispersant.

According to this configuration, the ammonia compound adsorbs to the surface of the reductively precipitated nickel powder in the reaction solution and functions as a barrier for preventing the aggregation of the nickel powder. Consequently, the dispersibility of the nickel powder is improved in the reaction solution, thus preventing the formation of a chain-like powder due to the aggregation of nickel particles. As a result, since the reductive reaction can be allowed to occur uniformly in the reaction solution, it is possible to obtain a nickel powder having a spherical shape and a sharp particle size distribution.

More specifically, by employing the manufacturing method of the present invention, it is possible to obtain a nickel powder or an alloy powder containing nickel as a main component, wherein the powder has a spherical shape, a mean particle diameter D₅₀ in the range of 10 to 300 nm, and a ratio (Dₘₐₓ/D₅₀) of a maximum particle diameter Dₘₐₓ to the mean particle diameter D₅₀ of 3 or less. Such a nickel powder or an alloy powder containing nickel as a main component, the powder having a spherical shape and a sharp particle size distribution, can be easily incorporated in a conductive paste with a high density. Accordingly, even when an internal electrode having a layer thickness of 1 µm or less is formed using a conductive paste containing a nickel powder or an alloy powder containing nickel as a main component, the surface of the electrode can be easily smoothened and electrode breakage can be prevented.

The ammonia compound having a molecular weight of 150 or less and used as the dispersant is not particularly limited as long as the ammonia compound can improve the dispersibility of the nickel powder in the reaction solution to prevent the aggregation of the nickel powder. For example, ammonium chloride, ammonium sulfate, ammonium acetate, or the like which has a molecular weight of 150 or less can be used. Among these, ammonium chloride is particularly preferably used as the ammonium compound from the standpoint that it contains a chlorine ion that is the same type of ion as the ion contained in titanium trichloride serving as a reducing agent. Alternatively, the dispersant may be used in combination with a polymer dispersant. For example, polyvinylpyrrolidone, a polycarboxylic acid-type anionic dispersant, or the like can be used.

The concentration of the ammonia compound in the reaction solution is preferably 50 g/L or more and 300 g/L or less. The reason for this is as follows. If the concentration of the ammonia compound is less than 50 g/L, the above-mentioned effect of improving the dispersibility of the nickel powder may not be sufficiently exhibited. If the concentration of the ammonia compound is more than 300 g/L, the concentration exceeds the solubility, which may result in a disadvantage that dissolution residue is left and thus the homogeneity of the reaction solution is disturbed.

Next, the conductive paste for internal electrodes of a multi-layer ceramic capacitor will be described. A conductive paste of the present invention contains, as main components, the above-described nickel powder or alloy powder containing nickel as a main component of the present invention and an organic vehicle. The organic vehicle used in the present invention is a mixture of a resin and a solvent. Examples of the resin that can be used include cellulosic resins such as methylcellulose, ethylcellulose, nitrocellulose, acetylcellulose, and cellulose propionate; acrylic acid esters such as methyl (meth)acrylate, ethyl (meth)acrylate, and propyl (meth)acrylate; alkyd resins; and polyvinyl alcohol. From the standpoint of safety, stability, and the like, ethylcellulose is particularly preferably used. Examples of the solvent constituting the organic vehicle include terpineol, tetralin, butyl carbitol, and carbitol acetate. These solvents may be used alone or as a mixture.

In preparation of the conductive paste, for example, an organic vehicle is prepared by dissolving an organic binder composed of a cellulosic resin in terpineol. Subsequently, a nickel powder or an alloy powder containing nickel as a main component of the present invention is mixed with the organic vehicle, and the mixture is kneaded and dispersed with a three-roll mill, a ball mill, or the like. Thus, the conductive paste for internal electrodes of a multi-layer ceramic capacitor of the present invention can be obtained. Note that a dielectric material, an additive for adjusting sintering, and the like may be added to the conductive paste.

Next, a method for manufacturing a multi-layer ceramic capacitor including the conductive paste described above will be described. The multi-layer ceramic capacitor is manufactured as follows: A plurality of dielectric layers composed of ceramic green sheets and a plurality of internal electrode layers composed of the conductive paste are alternately stacked by compression bonding to prepare a multi-layer body. The multi-layer body is then integrated by sintering, thus preparing a multi-layer ceramic sintered body used as a ceramic main body. Subsequently, a pair of external electrodes is formed on both ends of the ceramic main body.

More specifically, first, ceramic green sheets, which are unsintered ceramic sheets, are prepared. Each of these ceramic green sheets is formed by the following method, for example. A paste for a dielectric layer is prepared by adding an organic binder such as polyvinyl butyral and a solvent such as terpineol to a predetermined raw material powder of a ceramic such as a barium titanate. The paste for a dielectric layer is applied onto a support film such as a polyethylene terephthalate (PET) film, and the solvent is then removed by drying. The thickness of each dielectric layer composed of such a ceramic green sheet is not particularly limited, but is preferably in the range of 0.05 to 3 µm from the standpoint of a requirement for a reduction in the size of the multi-layer ceramic capacitor.

Next, the conductive paste described above is applied onto a surface of the ceramic green sheet by printing using a known method such as a screen printing method, thus preparing a plurality of ceramic green sheets, each of which has an internal electrode layer composed of the conductive paste thereon. Note that the thickness of the internal electrode layer composed of the conductive paste is preferably 1 µm or less from the standpoint of a requirement for a reduction in the thickness of the internal electrode layer.

Next, each of the ceramic green sheets is detached from the corresponding support film, and the ceramic green sheets are stacked by a heat and pressure treatment such that the dielectric layers composed of the ceramic green sheets and the internal electrode layers composed of the conductive paste provided on a surface of the corresponding dielectric layer are alternately arranged to obtain a multi-layer body. Note that the ceramic green sheets for protection onto which the conductive paste is not applied may be arranged on both surfaces of the multi-layer body.

Next, the multi-layer body is cut to have a predetermined size, thus forming a green chip. Subsequently, the green chip is subjected to a binder removal process and then sintered in a reductive atmosphere, thereby manufacturing a multi-layer ceramic sintered body. Note that the atmosphere in the binder removal process is preferably air or a N₂ atmosphere, and the temperature during the binder removal process is preferably in the range of 200°C to 400 °C. In addition, the hold time at the temperature in the binder removal process is preferably in the range of 0.5 to 24 hours. The sintering is conducted in a reductive atmosphere in order to suppress oxidation of a metal used in the internal electrode layers. The atmosphere during sintering is preferably an atmosphere of N₂ or a mixed gas of N₂ and H₂. The temperature during the sintering of the multi-layer body is preferably in the range of 1,250°C to 1,350°C. The hold time at the temperature during the sintering is preferably in the range of 0.5 to 8 hours.

By conducting the sintering of the green chip, the organic binder in the green sheets is removed and the ceramic raw material powder is sintered, thus forming ceramic dielectric layers. Furthermore, the organic vehicle in the internal electrode layers is removed and the nickel powder or the alloy powder containing nickel as a main component is sintered or melted and integrated with each other to form the internal electrodes. Consequently, a multi-layer ceramic sintered body in which a plurality of dielectric layers and a plurality of internal electrode layers are alternately stacked is formed.

From the standpoint that oxygen is taken to the inside of the dielectric layers so as to improve electrical characteristics and reoxidation of the internal electrodes is suppressed, an annealing process is preferably performed on the green chip after sintering. The atmosphere during the annealing process is preferably a N₂ atmosphere, and the temperature during the annealing process is preferably in the range of 800°C to 950°C. The hold time at the temperature during the annealing process is preferably in the range of 2 to 10 hours.

Subsequently, a pair of external electrodes is formed on the multi-layer ceramic sintered body prepared above, thus manufacturing a multi-layer ceramic capacitor. For example, copper, nickel, or an alloy thereof can be suitably used as a material for the external electrodes.

According to this embodiment described above, advantages described below can be achieved.
(1) In this embodiment, a nickel powder or an alloy powder containing nickel as a main component has a spherical shape, a mean particle diameter D₅₀ in the range of 10 to 300 nm, and a ratio (Dₘₐₓ/D₅₀) of a maximum particle diameter Dₘₐₓ to the mean particle diameter D₅₀ of 3 or less. Accordingly, the metal powder, namely, the nickel powder or the alloy powder containing nickel as a main component, has a sharp particle size distribution. Therefore, when the nickel powder or the alloy powder containing nickel as a main component is used in a conductive paste for internal electrodes of a multi-layer ceramic capacitor, the powder can be easily included in the conductive paste with a high density. Accordingly, even when an internal electrode having a small layer thickness of 1 µm or less is formed using the conductive paste containing the nickel powder or the alloy powder containing nickel as a main component, the surface of the electrode can be easily smoothened and electrode breakage can be prevented.

(2) In this embodiment, in producing a nickel powder or an alloy powder containing nickel as a main component, nickel ions are reduced by a reducing agent in a reaction solution containing the nickel ions, the reducing agent, and a dispersant to precipitate the nickel powder or the alloy powder containing nickel as a main component. In addition, an ammonia compound having a molecular weight of 150 or less is used as the dispersant. Accordingly, in the reaction solution, the ammonia compound adsorbs to the surface of the reductively precipitated nickel powder or alloy powder containing nickel as a main component and functions as a barrier for preventing the aggregation of the nickel powder or the alloy powder containing nickel as a main component. Therefore, the dispersibility of the nickel powder or the alloy powder containing nickel as a main component is improved in the reaction solution, thus preventing the formation of a chain-like powder due to the aggregation of nickel particles or alloy particles containing nickel as a main component. Accordingly, since the reductive reaction can be allowed to occur uniformly in the reaction solution, it is possible to obtain a nickel powder or an alloy powder containing nickel as a main component, the powder having a spherical shape and a sharp particle size distribution. As a result, in the case where the nickel powder or the alloy powder containing nickel as a main component is used in a conductive paste for internal electrodes of a multi-layer ceramic capacitor, the powder can be easily included in the conductive paste with a high density. Accordingly, even when an internal electrode having a layer thickness of 1 µm or less is formed using the conductive paste containing the nickel powder or the alloy powder containing nickel as a main component, the surface of the electrode can be easily smoothened and electrode breakage can be prevented.

(3) In this embodiment, ammonium chloride is used as an ammonia compound. Accordingly, the dispersibility of the nickel powder or the alloy powder containing nickel as a main component can be further improved in the reaction solution, thus reliably preventing the formation of a chain-like powder due to the aggregation of nickel particles or alloy particles containing nickel as a main component. As a result, it is possible to obtain a nickel powder or an alloy powder containing nickel as a main component, the powder having a spherical shape and a uniform particle diameter.

(4) In this embodiment, titanium trichloride, which has a strong reduction activity, is used as a reducing agent. Accordingly, nickel ions in the reaction solution can be easily reduced.

### EXAMPLES

The present invention will now be described on the basis of Example and Comparative Examples. It should be understood that the present invention is not limited to the Example, the Example can be modified or changed on the basis of the gist of the present invention, and such modifications and changes are not excluded from the scope of the present invention.

### (EXAMPLE 1)

### (Preparation of nickel powder)

Nickel chloride hexahydrate serving as a metal compound was dissolved in pure water so that the concentration was 80 g/L to prepare an aqueous solution containing nickel ions. Ammonium chloride (molecular weight 53.5) was added as a dispersant to the aqueous solution so that the concentration was 250 g/L. Subsequently, titanium chloride serving as a reducing agent was added so that the concentration was 80 g/L. In addition, sodium citrate serving as a complexing agent was added to so that the concentration was 92 g/L. Furthermore, as a second dispersant, polyvinylpyrrolidone, which is a polymer dispersant, was added so that the concentration was 1 g/L. Subsequently, these aqueous solutions were mixed to prepare a reaction solution. An aqueous sodium carbonate solution prepared by dissolving sodium carbonate in pure water so as to have a concentration of 50 g/L was added as a pH adjuster to the reaction solution, and the pH of the reaction solution was adjusted to 9.

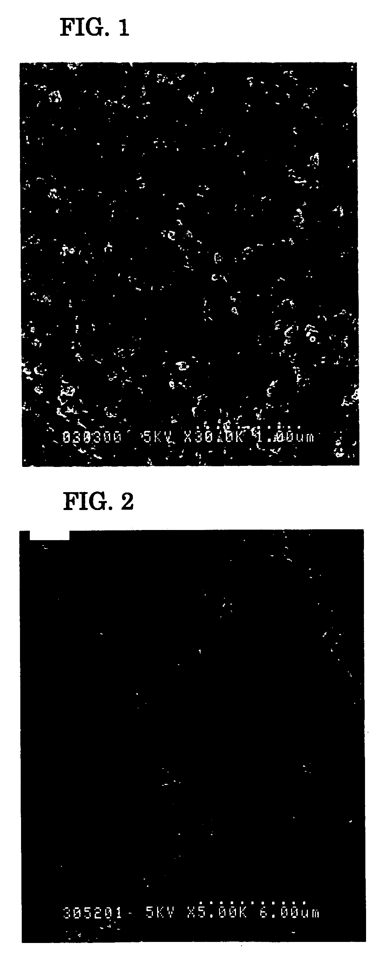

Next, this reaction solution was reacted at a reaction temperature of 30°C for 120 minutes under stirring at a rate of 500 rpm to reductively precipitate a nickel powder. Subsequently, the precipitated nickel powder was observed with a scanning electron microscope at a magnification of 30,000. It was confirmed that the nickel powder had a spherical shape. Furthermore, when a particle size distribution was measured by counting particles in an image of an electron microscope, a sharp peak was observed at a position of 100 nm. In addition, a mean particle diameter D₅₀ and a maximum particle diameter Dₘₐₓ were determined from the measured particle size distribution. The mean particle diameter D₅₀ was 104 nm and the maximum particle diameter Dₘₐₓ was 280 nm. Herein, the mean particle diameter D₅₀ was determined as follows. The particle diameters (averages of the major axis and the minor axis) of particles were determined for all particles in a field-of-view range of 3.3 × 4.0 µm of a scanning electron micrograph taken at a magnification of 30,000, and the mean particle diameter D₅₀ was then determined as the average of the particle diameters in terms of the volume. The maximum particle diameter Dₘₐₓ is the maximum particle diameter among the particle diameters of all the particles. Next, the reaction solution was subjected to suction filtration, and impurities were removed by repeatedly washing with pure water. Thus, a nickel dispersion containing water as a dispersion medium was obtained. The nickel dispersion was then dried to prepare a nickel powder. Figure 1 shows an electron micrograph of a nickel powder obtained in this Example.

### (Preparation of conductive paste)

Next, an organic vehicle was prepared by dissolving 10 parts by weight of ethylcellulose, which is as an organic binder, in 90 parts by weight of terpineol. Subsequently, 100 parts by weight of the nickel powder prepared above and 40 parts by weight of the organic vehicle were mixed, and the resulting mixture was kneaded and dispersed with a three-roll mill. Thus, a conductive paste for internal electrodes of a multi-layer ceramic capacitor was prepared.

### (Preparation of internal electrode and preparation of multi-layer body)

First, a paste for a dielectric layer (prepared by adding ethylcellulose, which is an organic binder, and terpineol, which is a solvent, to barium titanate, which is a ceramic raw material powder) was applied onto a PET film, which is a support film, in the form of a sheet and then dried to remove the solvent. Thus, a ceramic green sheet having a thickness of 2 µm was prepared. Subsequently, the conductive paste prepared above was applied onto a surface of the ceramic green sheet by printing using a screen printing method to form an internal electrode layer composed of the conductive paste and having a thickness of 0.8 µm. Next, the ceramic green sheet was detached from the PET film, and a ceramic green sheet for protection was stacked and compression-bonded onto the surface of the internal electrode layer of the detached ceramic green sheet. Thus, a multi-layer body was prepared in which the dielectric layers composed of the ceramic green sheets and the internal electrode layer composed of the conductive paste are alternately stacked.

### (Preparation of multi-layer ceramic sintered body)

The multi-layer body thus prepared was cut to have a predetermined size of 0.6 mm × 0.3 mm, thus forming a green chip. Subsequently, the green chip was subjected to a binder removal process, sintering, and an annealing process. Thus, a multi-layer ceramic sintered body, which is a capacitor main body, was prepared. The binder removal process was conducted in an air atmosphere at a temperature of 300°C for a hold time of one hour. The sintering was conducted in a N₂ gas atmosphere at a temperature of 1,300°C for a hold time of two hours. The annealing process was conducted in a N₂ gas atmosphere at a temperature of 900°C for a hold time of one hour.

### (Evaluation of smoothness of electrode surface and evaluation of electrode breakage)

Next, the multi-layer ceramic sintered body prepared above was cut, and the cross section thereof was observed using a scanning electron microscope (magnification: 2,000, field of view: 50 µm × 60 µm). The smoothness of an electrode and the presence or absence of electrode breakage were determined by visual observation. The results are shown in Table.

### (COMPARATIVE EXAMPLE 1)

A nickel powder was prepared as in Example 1 described above except that ammonium chloride, which is a dispersant, was not used, and a conductive paste, internal electrodes, a multi-layer body, and a multi-layer ceramic sintered body were obtained. Subsequently, the evaluation of the smoothness of the electrode surface and the evaluation of electrode breakage were conducted under the same conditions as those in Example 1 described above. The results are shown in Table. Figure 2 shows an electron micrograph of the nickel powder obtained in this Comparative Example.

### (COMPARATIVE EXAMPLE 2)

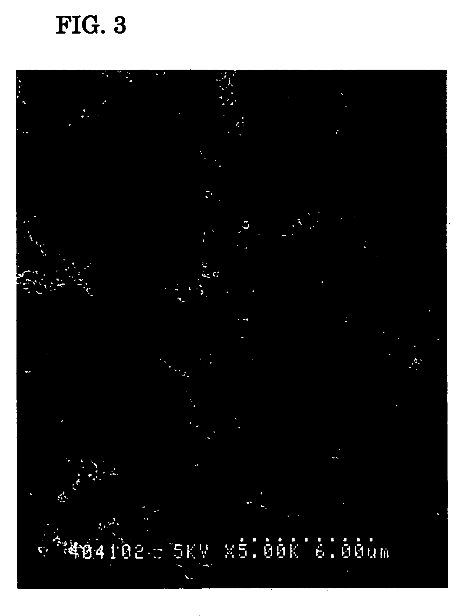

A nickel powder was prepared as in Example 1 described above except that thiourea was used as the dispersant instead of ammonium chloride and the thiourea was added so that the concentration was 10 g/L, and a conductive paste, internal electrodes, a multi-layer body, and a multi-layer ceramic sintered body were obtained. Subsequently, the evaluation of the smoothness of the electrode surface and the evaluation of electrode breakage were conducted under the same conditions as those in Example 1 described above. The results are shown in Table. Figure 3 shows an electron micrograph of the nickel powder obtained in this Comparative Example.

**[Table]**

| | Shape of nickel powder | Mean particle diameter D₅₀ | Ratio (Dₘₐₓ/D₅₀) of maximum particle diameter Dₘₐₓ to mean particle diameter D₅₀ | Smoothness of electrode surface | Electrode breakage |
|---|---|---|---|---|---|
| Example 1 | Spherical shape | 104nm | 2.69 | Good | Not observed |
| Comparative Example 1 | Chain-like shape | Could not be measured. | Could not be measured. | No good | Observed |
| Comparative Example 2 | Chain-Eke shape | Could not be measured. | Could not be measured. | No good | Observed |

As shown in Table and Fig. 1, the nickel powder of Example 1 had a spherical shape and was not present in the form of a chain-like powder. In addition, the mean particle diameter D₅₀ was in the range of 10 to 300 nm, and the ratio (Dₘₐₓ/D₅₀) of the maximum particle diameter Dₘₐₓ to the mean particle diameter D₅₀ was 3 or less. Furthermore, the internal electrode formed using the conductive paste containing the nickel powder of Example 1 had good surface smoothness and electrode breakage was not caused even when the internal electrode had a small layer thickness. Thus, the conductive paste containing the nickel powder of Example 1 is excellent in terms of the formation of internal electrodes of a multi-layer ceramic capacitor.

In contrast, as shown in Table and Figs. 2 and 3, each of the nickel powders of Comparative Examples land 2 was present in the form of a chain-like powder. Since each of the nickel powders of Comparative Examples 1 and 2 was present in the form of a chain-like powder, the mean particle diameter D₅₀ and the ratio (Dₘₐₓ/D₅₀) of the maximum particle diameter Dₘₐₓ to the mean particle diameter D₅₀ could not be measured. However, the nickel powder of Comparative Example 1 was a chain-like powder having a minor axis of 1,000 nm and a major axis of 20,000 nm, and the nickel powder of Comparative Example 2 was a chain-like powder having a minor axis of 500 nm and a major axis of 10,000 nm. Furthermore, each of the internal electrode formed using the conductive paste containing the nickel powder of Comparative Example 1 and the internal electrode formed using the conductive paste containing the nickel powder of Comparative Example 2 had poor surface smoothness and electrode breakage was caused when the internal electrodes had a small layer thickness. It is believed that this is because, in Comparative Examples 1 and 2, nickel particles were linked to each other, thereby forming a chain-like powder regardless of the presence or absence of the dispersant in the reaction solution, and thus it became difficult to include the powder in the conductive paste with a high density.

### Industrial Applicability

Examples of the use of the present invention relate to a nickel powder or an alloy powder containing nickel as a main component, a method for manufacturing the powder, a conductive paste, and a multi-layer ceramic capacitor. In particular, examples thereof include a nickel powder or an alloy powder containing nickel as a main component, the powder being suitable for conductive fine particles for a conductive paste used in internal electrodes of a multi-layer ceramic capacitor, a method for manufacturing the powder, and a conductive paste and multi-layer ceramic capacitor that contain the powder.

## Claims

1. A nickel powder or an alloy powder containing nickel as a main component, wherein the powder has a spherical shape, a mean particle diameter D₅₀ in the range of 10 to 300 nm, and a ratio (Dₘₐₓ/D₅₀) of a maximum particle diameter Dₘₐₓ to the mean particle diameter D₅₀ of 3 or less.

2. A method for manufacturing a nickel powder or an alloy powder containing nickel as a main component, the method comprising, in a reaction solution containing nickel ions, a reducing agent, and a dispersant, reducing the nickel ions by the reducing agent to precipitate a nickel powder or an alloy powder containing nickel as a main component,
wherein the dispersant is an ammonia compound having a molecular weight of 150 or less.

3. The method for manufacturing a nickel powder or an alloy powder containing nickel as a main component according to claim 2, wherein the ammonia compound is ammonium chloride.

4. The method for manufacturing a nickel powder or an alloy powder containing nickel as a main component according to claim 2 or 3, wherein the reducing agent is titanium trichloride.

5. A conductive paste comprising, as main components, the nickel powder or the alloy powder containing nickel as a main component according to claim 1 and an organic vehicle.

6. A multi-layer ceramic capacitor comprising a capacitor main body formed by alternately stacking internal electrode layers and dielectric layers,
wherein the internal electrode layers are composed of the conductive paste according to claim 5.
